(19) Europäisches Patentamt
European Patent Office
Office européen des brevets

(11) **EP 3 185 072 A1**

(12) **EUROPEAN PATENT APPLICATION**
published in accordance with Art. 153(4) EPC

(43) Date of publication:
**28.06.2017 Bulletin 2017/26**

(51) Int Cl.:
***G03B 17/56*** (2006.01)   ***H04N 5/225*** (2006.01)

(21) Application number: **16739390.9**

(86) International application number:
**PCT/CN2016/081909**

(22) Date of filing: **12.05.2016**

(87) International publication number:
**WO 2017/063361 (20.04.2017 Gazette 2017/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.10.2015 CN 201510671820**

(71) Applicants:
• **LE Holdings (Beijing) Co., Ltd.**
**Beijing 100025 (CN)**

• **Letv Sports Culture Develop(Beijing) Co., Ltd**
**Beijing 100025 (CN)**

(72) Inventor: **LI, Dalong**
**Beijing 100025 (CN)**

(74) Representative: **Zardi, Marco**
**M. Zardi & Co. SA**
**Via Pioda 6**
**6900 Lugano (CH)**

(54) **ACTION CAMERA**

(57) The invention provides an action camera apparatus including: a fixing base including a fixing face; and a rotation component including a camera and a rotation face, wherein there is an angle of 45 degrees between a plane where the rotation face lies, and a plane where a lens of the camera lies, wherein the rotation component is moveably connected with the fixing base, and the rotation face abuts the fixing face, wherein the rotation face can be rotated on the fixing face around a rotation axis which is a straight line perpendicular to the rotation face, and stop at a first preset position and a second preset position; and when the rotation face is rotated from the first preset position to the second preset position, the rotation face is rotated by 180 degrees bringing the lens of the camera into rotation by 90 degrees. The action camera apparatus according to an embodiment of the invention addresses such a technical problem that the lens of the camera may be singly oriented after the fixing base is fixed in position

Fig.5

EP 3 185 072 A1

## Description

This application claims the benefit of Chinese Patent Application No. 201510671820.8, filed with the Chinese Patent Office on October 13, 2015 and entitled "Action camera apparatus", the content of which is hereby incorporated by reference in its entirety.

## Field

The present invention relates to the field of action photographing, and particularly to an action camera apparatus.

## Background

An action camera apparatus for action photographing can be fixed on the body of a user, or on a device used by the user, e.g., the handle of a bicycle, a ski stick, etc., through a fixture, to photograph the moving user, or an environment in which the moving user is located, including bicycling, skiing, bungee jumping, and other motion scenarios, and recording personal life, tour entertainment, and other scenarios. The existing action camera apparatus includes a fixing base, and a camera fixed on one face of the fixing base. Thus the camera is fixed in position relative to the fixing base so that a lens of the camera is uniquely oriented after the fixing base is fixed in position by the fixture, which means such a technical problem that the the lens of the camera may be singly oriented after the fixing base is fixed in position.

Summary

Embodiments of the invention provide an action camera so as to address the technical problem in the prior art that the lens of the camera may be singly oriented after the fixing base is fixed in position.

An embodiment of the invention provides an action camera apparatus including:

a fixing base including a fixing face; and

a rotation component including a camera and a rotation face, wherein there is an angle of 45 degrees between a plane where the rotation face lies, and a plane where a lens of the camera lies, wherein:

the rotation component is moveably connected with the fixing base, and the rotation face abuts the fixing face, wherein the rotation face can be rotated on the fixing face around a rotation axis which is a straight line perpendicular to the rotation face, and stop at a first preset position and a second preset position; and when the rotation face is rotated from the first preset position to the second preset position, the rotation face is rotated by 180 degrees bringing the lens of the camera into rotation by 90 degrees.

The action camera apparatus according to this embodiment includes the fixing base, and the rotation component moveably connected therewith, and the rotation component includes the camera and the rotation face, where there is an angle of 45 degrees between the plane where the rotation face lies, and the plane where the lens of the camera lies, and the rotation face being rotated along the fixing face around the rotation axis which is a straight line perpendicular to the rotation face can stop at the first preset position and the second preset position; and when the rotation face is rotated from the first preset position to the second preset position, the rotation face is rotated by 180 degrees bringing the lens of the camera into rotation by 90 degrees. When the fixing base is fixed in position, then the lens of the camera can be oriented rotatably, and rest in two stable states in which the rotation face stops respectively at the first preset position and the second preset position, that is, if the fixing base is fixed in position, then the lens of the camera will be oriented in the two stable states, and rotated by 90 degrees from one of the stable states to the other, thus addressing such a technical problem that the lens of the camera may be singly oriented after the fixing base is fixed in position.

## Brief Description of the Drawings

In order to make the technical solutions according to the embodiments of the invention or in the prior art more apparent, the drawings to which a description of the embodiments or the prior art refers will be briefly introduced below, and apparently the drawings to be described below are merely illustrative of some of the embodiments of the invention, and those ordinarily skilled in the art can derive from these drawings other drawings without any inventive effort. In the drawings:

Fig.1 is an explosive view of an action camera apparatus according to an embodiment of the invention from the perspective of an angle;

Fig.2 is an explosive view of the action camera apparatus illustrated in Fig.1 from the perspective of another angle;

Fig.3 is a front view of the action camera apparatus illustrated in Fig.1;

Fig.4 is a right view of the action camera apparatus illustrated in Fig.3;

Fig.5 is a side view of the action camera apparatus illustrated in Fig.3 after a rotation component is rotated; and

Fig.6 is a schematic diagram of an ellipse of a first cross section of a rotation barrel of the action camera apparatus illustrated in Fig.3.

Reference numerals:

In the invention:

100 fixing base, 110 fixing face, 120 through-hole

210 a lens of a camera, 220 rotation face, 230 shaft, 231 clamp groove, 240 annular concave groove,

300 wearproof barrel, 400 axial stop component, 510 protrusion, 520 stop groove,

610 first cylindrical cam, 611 protruding bar, 620 second cylindrical cam, 630 spring

710 rotation barrel, 720 fixing barrel, 800 sealing ring

## Detailed Description of the Embodiments

In order to make the objects, technical solutions, and advantages of the embodiments of the invention more apparent, the technical solutions according to the embodiments of the invention will be described below clearly and fully with reference to the drawings in the embodiments of the invention, and apparently the embodiments described below are only a part but not all of the embodiments of the invention. Based upon the embodiments here of the invention, all the other embodiments which can occur to those skilled in the art without any inventive effort shall fall into the scope of the invention.

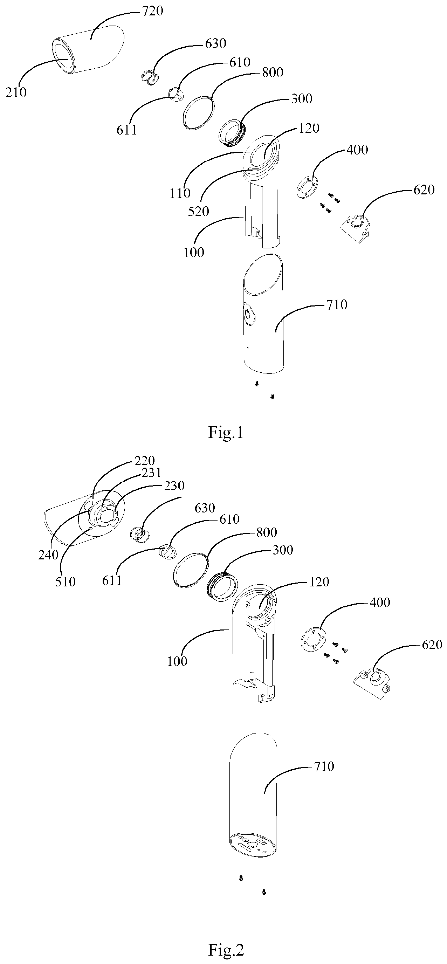

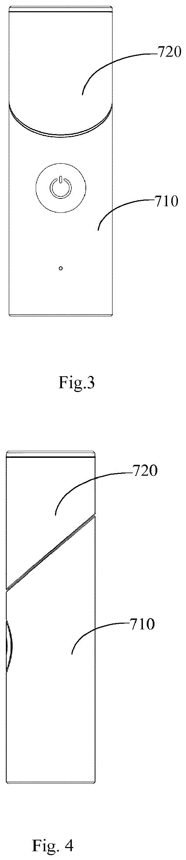

As illustrated in Fig.1 to Fig.5, an action camera apparatus according to an embodiment of the invention includes:

A fixing base 100 including a fixing face 110; and

A rotation component including a camera and a rotation face 220, where there is an angle of 45 degrees between a plane where the rotation face lies, and a plane where a lens 210 of the camera lies, where:

The rotation component is moveably connected with the fixing base, and the rotation face 220 abuts the fixing face 110, where the rotation face can be rotated on the fixing face around a rotation axis which is a straight line perpendicular to the rotation face, and stop at a first preset position and a second preset position; and when the rotation face is rotated from the first preset position to the second preset position, the rotation face is rotated by 180 degrees bringing that the lens of the camera is rotated by 90 degrees.

The action camera apparatus according to this embodiment includes the fixing base, and the rotation component moveably connected therewith, and the rotation component includes the camera and the rotation face, where there is an angle of 45 degrees between the plane where the rotation face lies, and the plane where the lens of the camera lies, and the rotation face being rotated on the fixing face around the rotation axis which is a straight line perpendicular to the rotation face can stop at the first preset position and the second preset position; and when the rotation face is rotated from the first preset position to the second preset position, the rotation face is rotated by 180 degrees so that the lens of the camera is rotated by 90 degrees. When the fixing base is fixed in position, then the lens of the camera can be oriented rotatably, and settle in two stable states in which the rotation face stops respectively at the first preset position and the second preset position, that is, when the fixing base is fixed in position, then the lens of the camera may be oriented in two stable states, and the orientation of the lens of the camera is rotated by 90 degrees from one of the stable states to the other, thus addressing such a technical problem that the lens of the camera may be singly oriented after the fixing base is fixed in position.

Furthermore as illustrated in Fig.1 to Fig.5, the action camera apparatus can further include:

A rotation barrel 710 including a first barrel opening at an angle of 45 degrees from the lengthwise direction of the rotation barrel, where the rotation component is fixed in the rotation barrel, and the rotation face coincides with the first barrel opening of the rotation barrel; and the camera films from a second barrel opening of the rotation barrel; and

A fixing barrel 720 including a first barrel opening at an angle of 45 degrees from the lengthwise direction of the fixing barrel, where the fixing component is fixed in the fixing barrel, and the fixing face coincides with the first barrel opening of the fixing barrel;

Where the first preset position is a position where the lengthwise direction of the rotation barrel agrees with the lengthwise direction of the fixing barrel.

In this way, the lens of the camera is oriented in two stable states including the position where the lengthwise direction of the rotation barrel agrees with the lengthwise direction of the fixing barrel, and a position where the lengthwise direction of the rotation barrel is perpendicular to the lengthwise direction of the fixing barrel.

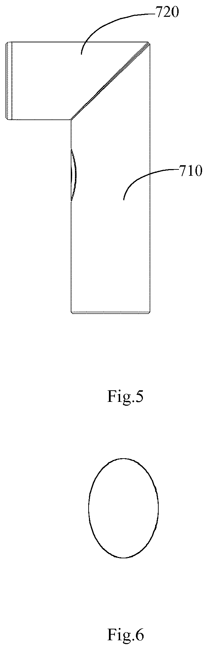

Furthermore as illustrated in Fig.6, a first cross section of the rotation barrel, and a first cross section of the fixing barrel are ellipses in the same shape and with the same size, where the major axis of each ellipse is $\sqrt{2}$ times the minor axis thereof, where the first cross section of the rotation barrel is a cross section which is perpendicular to the lengthwise direction of the rotation barrel, but does not intersect with the first barrel opening of the rotation barrel, and the first cross section of the fixing barrel is a cross section which is perpendicular to the lengthwise direction of the fixing barrel, but does not intersect with the first barrel opening of the fixing barrel; and

The first barrel opening of the rotation barrel is parallel to the major axis of the ellipse of the first cross section of the rotation barrel, and the first barrel opening of the fixing barrel is parallel to the major axis of the ellipse of the first cross section of the fixing barrel, so that the first barrel opening of the rotation barrel, and the first barrel opening of the fixing barrel are exact rounds with their centers coinciding with each other, and their diameters identical to each other; and the rotation axis passes the center of the first barrel opening of the rotation barrel;

Where the first barrel opening of the rotation barrel, and the first barrel opening of the fixing barrel interface with each other at the first preset position into a barrel shape.

In this way, there is such a state of action camera apparatus that the rotation barrel and the fixing barrel are connected to form into an elliptic barrel, where the rotation face of the rotation component, and the fixing face of the fixing base coincide with each other all the time while the rotation component is not rotating or is rotating, thus resulting in a good appearance design of the action camera apparatus.

In order to achieve such an effect that the rotation face can be rotated on the fixing face around the rotation axis which is a straight line perpendicular to the rotation face while the rotation component is moveably connected with the fixing base, they can be structured as illustrated in Fig.1 and Fig.2:

The rotation face 220 is provided with a shaft 230 perpendicular to the rotation face, and an annular concave groove 240 surrounding the shaft;

The fixing base 100 further includes a through-hole 120 perpendicular to the fixing face and penetrating the fixing base;

The action camera apparatus further includes a wearproof barrel 300 and an axial stop component 400;

There is an interference fit between the wearproof barrel 300 and the through hole 120, the shaft 230 is conjugated axially with a hollow part of the wearproof barrel, the axial stop component is fixed to one end of the shaft which passes through the hollow part of the wearproof barrel, and the axial stop component is clamped on the side of the wearproof barrel away from the rotation face, that is, the rotation component is moveably connected with the fixing base, and also the shaft is axially limited in position; and

The shaft 230 can be rotated on the inner wall of the wearproof barrel 300 under the action of an external force, and also one end of the wearproof barrel 300, oriented to the rotation component, is located in the annular concave groove 240, and the annular concave groove 240 can be rotated relative to the wearproof barrel 300 toward one end of the rotation component, that is, both of them are conjugated with each other so that the rotation face is rotated around the shaft which is used as a rotation axis to thereby bring the orientation the lens of the camera into rotation.

An assembling process is as follows:

Firstly the wearproof barrel is conjugated with the through-hole in an interference fit manner;

Thereafter the shaft passes through the end of the wearproof barrel proximate to the fixing face so that one end of the wearproof barrel, oriented to one end of the rotation component, is located in the annular concave groove, and the rotation face abuts the fixing face; and

Next at the side of the fixing base away from the fixing face, the axial stop component is fixed to one end of the shaft which passes through the hollow part of the wearproof barrel, and the axial stop component is clamped on the side of the wearproof barrel away from the rotation face, so that the axial stop component and the shaft are fixed to have the wearproof barrel clamped between the annular concave groove and the rotation face.

In this way, with the simple structure above, the rotation component is moveably connected with the fixing base, and the rotation face is rotated around the shaft which is used as a rotation axis.

Particularly on one hand, the wearproof barrel shall be made of a wearproof material to thereby improve the service lifetime of the action camera apparatus; and on the other hand, the wearproof barrel shall be made of such a material that facilitate rotation thereof, e.g., a wearproof barrel made of a copper material.

It shall be noted that the structure above has been described only by way of an example, but the invention will not be limited thereto, as long as the rotation component is moveably connected with the fixing base, and the rotation face is rotated along the fixing face around the rotation axis which is a straight line perpendicular to the rotation face, for example:

The annular concave groove may not be arranged on the rotation face, but the wearproof barrel can be clamped directly between the axial stop component and the rotation face; or

The wearproof barrel may not be included, but the shaft can be conjugated axially with the through-hole, the axial stop component can be fixed to one end of the shaft, which passes through the through-hole, the axial stop component can be clamped on the side of the fixing base away from the rotation face, and the shaft can be rotated along the hole wall of the through-hole under the action of an external force.

In order to limit the angle by which the rotation face is rotated, as illustrated in Fig.1 and Fig.2, a protrusion 510 is arranged on the rotation face of the rotation component, an arc-shaped stop groove 520 is arranged on the fixing face of the fixing base, the center of the arc of the stop groove 520 is located on an extension line of the axis of the through-hole, and the central angle corresponding to the arc of the stop groove is 180 degrees; and the protrusion 510 is located in the stop groove 520, and moves in the stop groove; and

If the rotation face stops at the first preset position and the second preset position, then the protrusion is located respectively on two ends of the stop groove.

The rotation face is rotated around a rotation axis which is the shaft under the action of an external force; and since the center of the arc of the stop groove is located on the extension line of the axis of the through hole, the protrusion located in the stop groove moves along the arc-shaped stop groove until it reaches either of the ends of the stop groove, that is, the rotation face is rotated by an angle limited to the central angle of the arc of the stop groove. The protrusion and the stop groove can be structured simply and arranged conveniently to thereby limit conveniently the angle by which the rotation face is rotated.

Optionally the protrusion can alternatively be arranged on the fixing face of the fixing base, and the stop groove can be arranged on the rotation face of the rotation component.

The largest angle range by which the rotation face can be rotated is limited by the central angle of the arc of the stop groove. In this largest angle range, in order to control the angle by which the rotation face is rotated, so that the rotation face can stop at the first preset position and the second preset position, the action camera apparatus can further include a rotation control structure configured to control the angle by which the rotation face is rotated, and thus the position of the rotation component relative to the fixing base.

Particularly as illustrated in Fig.1 and Fig.2, the rotation control structure includes a spring 630, a first cylindrical cam 610, and a second cylindrical cam 620, where annular curve of a first end face of the first cylindrical cam, and annular curve of a first end face of the second cylindrical cam are in the same shape and are spatial curves into which sinusoidal curves including two peaks and two valleys are connected from their heads to tails;

The shaft 230 is a hollow shaft; and the spring is pressed by a second end face of the first cylindrical cam into the hollow shaft, and the first cylindrical cam is fixed circumferentially on the shaft;

The second cylindrical cam is fixed to the fixing base, and conjugated and linked with the first cylindrical cam, so that the second cylindrical cam is fixed to the fixing base such that the first cylindrical cam and the spring are constrained between the second cylindrical cam and the hollow shaft in the axial direction; and

When the rotation face stops at the first preset position and the second preset position, the first end face of the first cylindrical cam is engaged with the first end face of the second cylindrical cam.

When the first end face of the first cylindrical cam is engaged with the first end face of the second cylindrical cam, then the rotation face may stop at the first preset position and the second preset position, and if an external force is applied to the rotation component, the rotation face can be rotated only if a frictional force between the first end face of the first cylindrical cam, and the first end face of the second cylindrical cam is overcome. In this way, the rotation component is stably positioned relative to the fixing base to thereby avoid the rotation face of the action camera apparatus from being rotated by shaking or another minor external force after the rotation face stops at the first preset position and the second preset position, so as to control the rotation component to be positioned relative to the fixing base.

When the first end face of the first cylindrical cam is engaged with the first end face of the second cylindrical cam, then the gap between the rotation face or the annular concave groove and the fixing face is the smallest; and while the rotation component is being rotated by an external force so that the rotation face is rotated until first end face of the first cylindrical cam is engaged with the first end face of the second cylindrical cam again, the first cylindrical cam moves along the first end face of the second cylindrical cam, and is pushed by the second cylindrical cam to move axially so that the first cylindrical cam applies an axial force to the rotation component through the spring; and the gap between the rotation face or the annular concave groove and the fixing face becomes larger so that the rotation face is rotated more smoothly.

Particularly the length of the uncompressed spring is less than the height of the shaft.

In order to enable the first cylindrical cam to be fixed circumferentially on the shaft, as illustrated in Fig.1 and Fig.2, a number of clamp grooves 231 are arranged symmetrically on the inner wall of the hollow shaft 230, each of the clamp grooves 231 extends axially along the shaft, and protruding bars 611 conjugated with the clamp grooves are arranged on the outer wall of the first cylindrical cam 610 so that the protruding bars 611 are engaged with the clamp grooves 231.

In this way, with the simple structure, the first cylindrical cam is fixed circumferentially on the shaft.

Furthermore the action camera apparatus can further include a sealing ring 800, and a sealing groove is arranged on the outside of the fixing base, where the sealing ring 800 is fit within the sealing groove so that there is no air between the fixing base and the first fixing barrel.

Optionally a switch button of the camera of the action camera apparatus is arranged on the rotation component and exposed through a switch button hole on the fixing barrel so that the user can operate to switch on and off the camera conveniently.

Lastly it shall be noted that the respective embodiments above are merely intended to illustrate but not to limit the technical solution of the invention; and although the invention has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the invention as claimed.

**Claims**

1. An action camera apparatus, comprising:

   a fixing base comprising a fixing face; and
   a rotation component comprising a camera and a rotation face, wherein there is an angle of 45 degrees between a plane where the rotation face lies, and a plane where a lens of the camera lies, wherein:

   the rotation component is moveably connected with the fixing base, and the rotation face abuts the fixing face, wherein the rotation face can be rotated on the fixing face around a rotation axis which is a straight line perpendicular to the rotation face, and stop at a first preset position and a second preset position; and when the rotation face is rotated from the first preset position to the second preset position, the rotation face is rotated by 180 degrees bringing the lens of the camera into rotation by 90 degrees.

2. The action camera apparatus according to claim 1, further comprising:

   a rotation barrel comprising a first barrel opening at an angle of 45 degrees from a lengthwise direction of the rotation barrel, wherein the rotation component is fixed in the rotation barrel, and the rotation face coincides with the first barrel opening of the rotation barrel; and
   a fixing barrel comprising a first barrel opening at an angle of 45 degrees from a lengthwise direction of the fixing barrel, wherein the fixing component is fixed in the fixing barrel, and the fixing face coincides with the first barrel opening of the fixing barrel;
   wherein the first preset position is a position where the lengthwise direction of the rotation barrel agrees with the lengthwise direction of the fixing barrel.

3. The action camera apparatus according to claim 2, wherein a first cross section of the rotation barrel, and a first cross section of the fixing barrel are ellipses in a same shape and with a same size, wherein a major axis of each ellipse is $\sqrt{2}$ times a minor axis thereof, the first cross section of the rotation barrel is a cross section which is perpendicular to the lengthwise direction of the rotation barrel, but does not intersect with the first barrel opening of the rotation barrel, and the first cross section of the fixing barrel is a cross section which is perpendicular to the lengthwise direction of the fixing barrel, but does not intersect with the first barrel opening of the fixing barrel; and
   the first barrel opening of the rotation barrel is parallel to the major axis of the ellipse of the first cross section of the rotation barrel, and the first barrel opening of the fixing barrel is parallel to the major axis of the ellipse of the first cross section of the fixing barrel, so that the first barrel opening of the rotation barrel, and the first barrel opening of the fixing barrel are exact rounds with their centers coinciding with each other, and their diameters identical to each other; and the rotation axis passes the center of the first barrel opening of the rotation barrel;
   wherein the first barrel opening of the rotation barrel, and the first barrel opening of the fixing barrel interface with each other at the first preset position into a barrel shape.

4. The action camera apparatus according to claim 1, 2 or 3, wherein the rotation face is provided with a shaft perpendicular to the rotation face;
   the fixing base further comprises a through-hole perpendicular to the fixing face and penetrating the fixing base;
   the action camera apparatus further comprises an axial stop component; and
   the shaft is conjugated axially the through-hole, the axial stop component is fixed on one end of the shaft which passes through the through-hole, the axial stop component is clamped on a side of the fixing base away from the rotation face, and the shaft can be rotated over a hole wall of the through hole under an action of an external force.

5. The action camera apparatus according to claim 1, 2 or 3, wherein the rotation face is provided with a shaft perpendicular to the rotation face;

the fixing base further comprises a through-hole perpendicular to the fixing face and penetrating the fixing base;

the action camera apparatus further comprises a wearproof barrel and an axial stop component; and the wearproof barrel is conjugated with the through-hole in an interference fit manner, and the shaft is conjugated axially with a hollow part of the wearproof barrel; the axial stop component is fixed on one end of the shaft which passes through the hollow part of the wearproof barrel, and the axial stop component is clamped on a side of the wearproof barrel away from the rotation face; and the shaft can be rotated over an inner wall of the wearproof barrel under an action of an external force.

6. The action camera apparatus according to claim 5, wherein an annular concave groove surrounding the shaft is further arranged on the rotation face, the annular concave groove is conjugated with the wearproof barrel; and the end of the wearproof barrel oriented to the rotation component is located in the annular concave groove.

7. The action camera apparatus according to claim 1, 2 or 3, wherein a protrusion is arranged on one of the rotation face of the rotation component, and the fixing face of

the fixing base, and an arc-shaped stop groove is arranged on the other face, wherein a center of an arc of the stop groove is located on an extension line of the axis of the through-hole, and the central angle corresponding to the arc of the stop groove is 180 degrees; and the protrusion is located in the stop groove, and moves in the stop groove; and

if the rotation face stops at the first preset position and the second preset position, then the protrusion is located respectively on two ends of the stop groove.

8. The action camera apparatus according to claim 7, wherein the protrusion is arranged on the rotation face of the rotation component, and the stop groove is arranged on the fixing face of the fixing base.

9. The action camera apparatus according to claim 4, further comprising a rotation control structure comprising a spring, a first cylindrical cam, and a second cylindrical cam, wherein annular curves of a first end face of the first cylindrical cam, and a first end face of the second cylindrical cam are in the same shape and are spatial curves into which sinusoidal curves comprising two peaks and two valleys are connected from their heads to tails;

the shaft is a hollow shaft; and the spring is pressed by a second end face of the first cylindrical cam into the hollow shaft, and the first cylindrical cam is fixed circumferentially on the shaft;

the second cylindrical cam is fixed to the fixing base, and conjugated and linked with the first cylindrical cam; and

when the rotation face stops at the first preset position and the second preset position, the first end face of the first cylindrical cam is engaged with the first end face of the second cylindrical cam.

10. The action camera apparatus according to claim 9, wherein a length of an uncompressed spring is less than a height of the shaft.

11. The action camera apparatus according to claim 9, wherein a number of clamp grooves are arranged symmetrically on an inner wall of the hollow shaft so that each of the clamp grooves extends axially along the shaft, and protruding bars conjugated with the clamp groove are arranged on an outer wall of the first cylindrical clamp so that the protruding bars are engaged with the clamp grooves.

12. The action camera apparatus according to claim 2 or 3, further comprising a sealing ring, wherein a sealing groove is arranged on the outside of the fixing base, and the sealing ring is fit within the sealing groove so that there is no air between the fixing base and the fixing barrel.

Fig.1

Fig.2

720

710

Fig.3

720

710

Fig. 4

Fig.5

Fig.6

# INTERNATIONAL SEARCH REPORT

| International application No. |
| --- |
| **PCT/CN2016/081909** |

## A. CLASSIFICATION OF SUBJECT MATTER

G03B 17/56 (2006.01) i; H04N 5/225 (2006.01) i

According to International Patent Classification (IPC) or to both national classification and IPC

## B. FIELDS SEARCHED

Minimum documentation searched (classification system followed by classification symbols)

G03B, ; H04N

Documentation searched other than minimum documentation to the extent that such documents are included in the fields searched

Electronic data base consulted during the international search (name of data base and, where practicable, search terms used)

CNKI, CNPAT, EPODOC, WPI: shoot, pin joint, 90 degrees, 180 degrees, 45 degrees, shooting direction, irradiation direction, orientation, fixed barrel, lens barrel, camera, hand, portable, rotat????, degree, angle, direction, orthogonal, perpendicular????, barrel, housing

## C. DOCUMENTS CONSIDERED TO BE RELEVANT

| Category* | Citation of document, with indication, where appropriate, of the relevant passages | Relevant to claim No. |
| --- | --- | --- |
| E | CN 205247040 U (LETV SPORTS CULTURE DEVELOPMENT (BEIJING) CO., LTD.), 18 May 2016 (18.05.2016), claims 1-13 | 1-12 |
| PX | CN 204810390 U (SHENZHEN AEE TECHNOLOGY CO., LTD.), 25 November 2015 (25.11.2015), description, paragraphs [0021]-[0028], and figures 1-6 | 1 |
| Y | DE 202004016627 U1 (REMPEL, H.), 10 March 2005 (10.03.2005), description, paragraphs [0001]-[0006], and figure 1 | 1-3, 12 |
| Y | DE 202007004597 U1 (KAISER FOTOTECHNIK GMBH & CO. KG), 05 July 2007 (05.07.2007), description, paragraphs [0035]-[0045], and figures 1-16 | 1-3, 12 |
| A | CN 203131442 U (LI, Wanjing et al.), 14 August 2013 (14.08.2013), the whole document | 1-12 |
| A | CN 200940774 Y (MAO, Jincan), 29 August 2007 (29.08.2007), the whole document | 1-12 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 July 2016 (06.07.2016) | **21 July 2016 (21.07.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WEI, Huimin** Telephone No.: (86-10) **61648465** |
| --- | --- |

Form PCT/ISA/210 (second sheet) (July 2009)

# INTERNATIONAL SEARCH REPORT

International application No.

**PCT/CN2016/081909**

**C (Continuation).** DOCUMENTS CONSIDERED TO BE RELEVANT

| Category* | Citation of document, with indication, where appropriate, of the relevant passages | Relevant to claim No. |
|---|---|---|
| A | CN 201562113 U (SHENZHEN AEE WIRELESS TECHNOLOGY CO., LTD.), 25 August 2010 (25.08.2010), the whole document | 1-12 |

Form PCT/ISA/210 (continuation of second sheet) (July 2009)

## INTERNATIONAL SEARCH REPORT
Information on patent family members

International application No.

**PCT/CN2016/081909**

| Patent Documents referred in the Report | Publication Date | Patent Family | Publication Date |
|---|---|---|---|
| CN 205247040 U | 18 May 2016 | None | |
| CN 204810390 U | 25 November 2015 | None | |
| DE 202004016627 U1 | 10 March 2005 | None | |
| DE 202007004597 U1 | 05 July 2007 | None | |
| CN 203131442 U | 14 August 2013 | None | |
| CN 200940774 Y | 29 August 2007 | None | |
| CN 201562113 U | 25 August 2010 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510671820